# EUROPÄISCHE PATENTSCHRIFT

(11) **EP 2 934 945 B1**
(45) Veröffentlichungstag und Bekanntmachung des Hinweises auf die Patenterteilung: **05.09.2018**
(21) Anmeldenummer: 13795501.9
(22) Anmeldetag: 26.11.2013
(51) Int. Cl.: F21S 41/176

(54) **BELEUCHTUNGSVORRICHTUNG FÜR EIN KRAFTFAHRZEUG**
LIGHTING DEVICE FOR A MOTOR VEHICLE
DISPOSITIF D'ÉCLAIRAGE POUR UN VÉHICULE AUTOMOBILE

(30) Priorität: 18.12.2012 DE 102012223610
(43) Veröffentlichungstag der Anmeldung: 28.10.2015
(73) Patentinhaber: Bayerische Motoren Werke Aktiengesellschaft, 80809 München (DE)
(72) Erfinder: ERDL, Helmut, 83126 Flintsbach (DE); HANAFI, Abdelmalek, 80686 München (DE)
(86) Internationale Anmeldenummer: PCT/EP2013/074679
(87) Internationale Veröffentlichungsnummer: WO 2014/095254

(56) Entgegenhaltungen:
- DE-A1-102010 028 949
- DE-A1-102011 013 211
- US-A1- 2009 046 474
- US-A1- 2011 249 460

## Beschreibung

Die Erfindung betrifft eine Beleuchtungsvorrichtung für ein Kraftfahrzeug gemäß dem Oberbegriff des Anspruchs 1.

Aus dem Stand der Technik sind Beleuchtungsvorrichtungen für Kraftfahrzeuge mit einem Scanner bekannt, mit dem über die Ablenkung eines Lichtbündels über einen reflektierenden Scanspiegel eine vorgegebene Lichtverteilung im Fernfeld des Fahrzeugs generiert wird.

Bei Beleuchtungsvorrichtungen mit Scanner erweist es sich als nachteilhaft, dass die Ablenkfrequenz des Scanspiegels zur Erzeugung von Strukturen in der Lichtverteilung mit hoher Auflösung bzw. mit großen Gradienten sehr hoch sein muss. Dies führt insbesondere bei hohen Fahrzeuggeschwindigkeiten zu störenden Scaneffekten, wie z.B. dem Stroboskop-Effekt. Zur Erzeugung von Hell-Dunkel-Grenzen erfordern scannende Beleuchtungsvorrichtungen eine sehr hohe optische Auflösung, um die notwendigen Gradienten in der Lichtverteilung erzeugen zu können.

Zur Generierung von Hell-Dunkel-Grenzen ist es ferner bekannt, physische Blenden in den Strahlengang des Lichtbündels einzuführen. Diese weisen jedoch den Nachteil auf, dass sie im Allgemeinen zu Abschattungseffekten in der generierten Lichtverteilung führen.

Die Dokumente DE 10 2010 028 949 A1, US 2011/0249460 A1 und US 2009/0046474 A1 offenbaren Fahrzeugleuchten, die mittels Scannern eine Lichtverteilung erzeugen. Das Dokument DE 102011 013 211 A1 offenbart eine Fahrzeugleuchte ohne Scanner, die eine Blende zur Generierung einer Hell-Dunkel-Grenze einsetzt.

Aufgabe der Erfindung ist es, eine Beleuchtungsvorrichtung für ein Kraftfahrzeug zu schaffen, mit der eine Lichtverteilung von hoher Qualität erzeugt werden kann.

Diese Aufgabe wird durch die Beleuchtungsvorrichtung gemäß Patentanspruch 1 gelöst. Weiterbildungen der Erfindung sind in den abhängigen Ansprüchen definiert.

Die erfindungsgemäße Beleuchtungsvorrichtung ist für ein Kraftfahrzeug, wie z.B. einen PKW oder einen LKW, vorgesehen. Sie umfasst eine Lichtquelle aus einer Anzahl von Halbleiterdioden sowie eine Scaneinrichtung, auf welche Licht der Lichtquelle fällt und welche im Betrieb der Beleuchtungsvorrichtung eine zeitlich variierende Ablenkung des einfallenden Lichts der Lichtquelle und hierdurch eine vorgegebene Lichtverteilung in einem Abstand von der Beleuchtungsvorrichtung erzeugt. Die vorgegebene Lichtverteilung wird dabei insbesondere im Fernfeld der Beleuchtungsvorrichtung generiert. Unter Fernfeld ist die Lichtverteilung in einem Abstand von der Beleuchtungsvorrichtung zu verstehen, der wesentlich größer als die Abmessungen der Beleuchtungsvorrichtung ist und insbesondere im Bereich von 25 m vor der Beleuchtungsvorrichtung liegt.

Die erfindungsgemäße Beleuchtungsvorrichtung zeichnet sich dadurch aus, dass die darin verbaute Scaneinrichtung zumindest zwei getrennt ansteuerbare Scanner umfasst, auf welche jeweils ein separates, aus dem Licht der Lichtquelle erzeugtes Lichtbündel fällt, dessen Ablenkung durch den jeweiligen Scanner zeitlich variiert wird. Unter einem Lichtbündel ist dabei ein im Winkel bzw. im Raum begrenztes Bündel aus Lichtstrahlen zu verstehen, wobei die Lichtstrahlen im Bündel im Wesentlichen parallel bzw. auch auseinander oder zusammenlaufen können. Die Scaneinrichtung umfasst somit zumindest zwei separate Scanner mit zugeordneten Ablenkelementen, welche insbesondere als reflektierende Scanspiegel ausgestaltet sind. Durch die getrennte Ansteuerung der Scanner können die Ablenkelemente unabhängig voneinander eine zeitliche Variation der Ablenkung des entsprechenden Lichtbündels bewirken. Durch die Verwendung von mehr als einem Scanner kann dabei die Ablenkfrequenz der einzelnen Scanner bei unveränderter Auflösung bzw. unverändertem Gradienten der Lichtverteilung herabgesetzt werden, wodurch störende Scaneffekte, die insbesondere bei hohen Fahrzeuggeschwindigkeiten auftreten, vermieden werden.

In der erfindungsgemäßen Beleuchtungsvorrichtung ist im Strahlengang der Lichtbündel nach Ablenkung durch die Scaneinrichtung eine Blende angeordnet, mit der die Lichtverteilung begrenzt wird. In einer bevorzugten Ausführungsform wird mit der Blende eine Hell-Dunkel-Grenze in der vorgegebenen Lichtverteilung generiert. Vorzugsweise erstreckt sich die Blende im Wesentlichen parallel zu einer, durch den Strahlengang der Lichtbündel vorgegebenen optischen Achse.

In der erfindungsgemäßen Beleuchtungsvorrichtung bewirkt die Blende eine Unterteilung einer Bildebene in zwei Bereiche, wobei in zumindest einer Betriebsart der Beleuchtungsvorrichtung ein Teil der Scaneinrichtung ausschließlich zur Ablenkung von Lichtbündeln in einem Bereich auf einer Seite der Blende und insbesondere unterhalb der Blende vorgesehen ist und der andere Teil der Scanner der Scaneinrichtung ausschließlich zur Ablenkung von Lichtbündeln in einem Bereich auf der anderen Seite der Blende und insbesondere oberhalb der Blende vorgesehen ist. Auf diese Weise können Abschattungseffekte, welche bei der Verwendung einer S caneinrichtung mit einem einzelnen Scanner auftreten können, vermieden werden. Diese Abschattungseffekte werden nochmals näher in der detaillierten Beschreibung erläutert. Die oben genannte Bildebene, welche in zwei Bereiche unterteilt wird, ist in einer bevorzugten Variante eine Zwischenbildebene, welche durch eine Austrittsoptik in die vorgegebene Lichtverteilung in einem Abstand von der Beleuchtungsvorrichtung abgebildet wird.

Gegebenenfalls besteht ferner die Möglichkeit, dass zusätzlich zu der oben beschriebenen Blende, welche im Strahlengang der Lichtbündel nach Ablenkung durch die Scaneinrichtung angeordnet ist, eine oder mehrere weitere Blenden an anderen Positionen im Strahlengang, z.B. vor der Scaneinrichtung, vorgesehen sind.

In einer besonders bevorzugten Ausführungsform der erfindungsgemäßen Beleuchtungsvorrichtung umfassen einer oder mehrere der Scanner und insbesondere alle Scanner der Scaneinrichtung jeweils eine zweidimensionale Scaneinheit, mit der das entsprechende Lichtbündel in zwei Richtungen und insbesondere in eine horizontale und eine vertikale Richtung abgelenkt werden können. Die horizontale und vertikale Richtung beziehen sich dabei auf die Beleuchtungsvorrichtung im eingebauten Zustand im Fahrzeug, d.h. die vertikale Richtung erstreckt sich von der Fahrbahn senkrecht nach oben und die horizontale Richtung parallel zur Fahrbahn. Die zweidimensionale Scaneinheit kann dabei als ein 2D-Scanner mit einem einzelnen, in zwei Richtungen verschwenkbaren Ablenkelement bzw. Scanspiegel ausgestaltet sein. Gegebenenfalls kann die zweidimensionale Scaneinheit auch durch zwei Ablenkelemente bzw. Scanspiegel gebildet werden, die gemeinsam angesteuert werden. In einer besonders bevorzugten Ausführungsform sind die Scanner der erfindungsgemäßen Beleuchtungsvorrichtung zumindest teilweise Vektor-Scaneinheiten, bei denen die Scangeschwindigkeit und die Scanrichtung variiert werden kann.

In einer weiteren Ausgestaltung umfasst die erfindungsgemäße Beleuchtungsvorrichtung zumindest eine Eintrittsoptik für das Licht der Lichtquelle, wobei im Betrieb der Beleuchtungsvorrichtung über die zumindest eine Eintrittsoptik die separaten Lichtbündel erzeugt werden. Vorzugsweise ist eine gemeinsame Eintrittsoptik zur Erzeugung aller separater Lichtbündel vorgesehen. Hierdurch wird der Aufbau der Beleuchtungsvorrichtung weniger komplex. Die Eintrittsoptik kann z.B. ein Linsenarray umfassen, wobei mit jeder Linse des Arrays ein separates Lichtbündel generiert wird. Vorzugsweise ist dem Linsenarray dabei eine Kollimatorlinse zur Bündelung des von der Lichtquelle stammenden Lichts vorgeschaltet.

In einer weiteren, besonders bevorzugten Ausführungsform ist die Beleuchtungsvorrichtung derart ausgestaltet, dass die separaten Lichtbündel Lichtspots unterschiedlicher Größe in der vorgegebenen Lichtverteilung generieren. Auf diese Weise können durch die Beleuchtungsvorrichtung sehr flexibel unterschiedliche Lichtverteilungen mit in Teilbereichen unterschiedlicher Auflösung erzeugt werden, so dass durch die scannende Beleuchtungseinrichtung die Funktion eines adaptiven optischen Elements in der Form einer Linse mit variabler Brechkraft übernommen werden kann.

In einer weiteren Ausgestaltung der erfindungsgemäßen Beleuchtungsvorrichtung ist für die durch die zumindest zwei Scanner abgelenkten Lichtbündel zumindest eine Austrittsoptik vorgesehen, über welche als Abbildung die vorgegebene Lichtverteilung im Abstand von der Beleuchtungsvorrichtung generiert wird. Vorzugsweise ist eine gemeinsame Austrittsoptik für alle abgelenkten Lichtbündel vorgesehen, wodurch der Aufbau der Beleuchtungsvorrichtung vereinfacht wird.

In einer weiteren Ausgestaltung der erfindungsgemäßen Beleuchtungsvorrichtung generieren einer oder mehrere der Scanner der Scaneinrichtung jeweils einen separaten Bereich der vorgegebenen Lichtverteilung. Alternativ oder zusätzlich ist es jedoch auch möglich, dass zumindest zwei Scanner überlappende Bereiche der vorgegebe nen Lichtverteilung erzeugen.

Zusätzlich zu der oben beschriebenen Blende ist in einer weiteren bevorzugten Ausführungsform zumindest ein Scanner ausschließlich zur Generierung der Lichtverteilung an der Hell-Dunkel-Grenze in zumindest einer Betriebsart der Beleuchtungsvorrichtung (z.B. bei der Generierung einer Abblendlichtcharakteristik) vorgesehen. Dieser Scanner kann dabei mit einer höheren Ablenkfrequenz als die anderen Scanner betrieben werden bzw. einen kleineren Lichtspot als die anderen Scanner in der Lichtverteilung erzeugen, um hierdurch hohe Auflösungen im Bereich der Hell-Dunkel-Grenze zu erreichen. Dies hat den Vorteil, dass man einen Gradientenverlauf in einer Lichtverteilung variabel, d.h. unabhängig von starren physikalischen Blenden, gestalten kann.

In einer weiteren Ausgestaltung der erfindungsgemäßen Beleuchtungsvorrichtung sind die zumindest zwei Scanner der Scaneinrichtung auf einer gemeinsamen Baueinheit vorgesehen, wobei die gemeinsame Baueinheit insbesondere eine gemeinsame Kühleinheit und/oder eine gemeinsame Elektronikeinheit für die Scanner und/oder eine gemeinsame mechanische Einstelleinrichtung für einen Träger aufweist, auf dem die Scanner montiert sind. Hierdurch wird ein einfacher Aufbau der Scaneinrichtung erreicht. Aufgrund der Verwendung von mehreren Scannern ist ferner eine größere Spreizung der lokalen Temperaturlast auf der Kühleinheit gewährleistet, was den Bauraum und das Gewicht der in der Kühleinheit verwendeten Kühlelemente erheblich reduziert.

In einer weiteren Variante ist zumindest ein Scanner und insbesondere jeder der Scanner der Scaneinrichtung als ein MEMS-Element ausgestaltet, das durch seinen mikromechanischen Scanneraufbau eine besonders kompakte und robuste Ausführungsform mit hohen Ablenkgeschwindigkeiten erlaubt. Insbesondere eignen sich diese Elemente für eine arrayförmige Anordnung auf einem gemeinsamen Bauelement und können durch die Verteilung der Lichtströme auf mehrere Einheiten auch für Hochleistungsanwendungen im Kraftfahrzeugbereich eingesetzt werden.

In einer weiteren Variante umfasst die Anzahl der Halbleiterdioden eine oder mehrere und insbesondere ausschließlich Laserdioden. Hierdurch kann eine Lichtverteilung mit sehr hoher lokaler Lichtstärke erzeugt werden. Die Laserdioden weisen vorzugsweise eine jeweilige Maximalleistung von mindestens 1 W und insbesondere zwischen 1,5 und 5 W auf. Vorzugsweise wird die Anzahl der Halbleiterdioden zur Generierung der vorgegebenen Lichtverteilung mit konstanter und insbesondere maximaler Leistung betrieben, wodurch die Beleuchtungsvorrichtung besonders wirtschaftlich eingesetzt wird.

In einer weiteren Ausführungsform der Erfindung ist die Lichtquelle eine monochromatische Lichtquelle, wobei ein Konvertierungselement zur Wandlung des Lichts der Lichtquelle in Weißlicht vorgesehen ist. Solche Konvertierungselemente sind an sich aus dem Stand der Technik bekannt. Beispielsweise kann bei blauen/violetten Laserdioden mit einer Emissionswellenlänge von 450 nm/405 nm ein Phosphorkonvertierungselement aus Nitrid-Phosphor oder Oxidnitrid-Phosphor oder Cerium-dotiertem YAG-Phosphor zur Generierung von Weißlicht verwendet werden.

Das Konvertierungselement, welches insbesondere als Schicht ausgestaltet ist, kann je nach Ausgestaltung der Erfindung an unterschiedlichen Positionen angeordnet sein. In einer Variante ist das Konvertierungselement an einer Position angeordnet, an der das Lichtbündel die Scaneinrichtung bereits passiert hat, z.B. in der oben genannten Zwischenbildebene. Das Konvertierungselement kann jedoch auch an der Lichtquelle oder zwischen Lichtquelle und Scaneinrichtung angeordnet sein. Im letzteren Fall ist das Konvertierungselement an einer Position im Strahlengang des Lichtbündels angeordnet, bevor das Lichtbündel auf die Scaneinrichtung fällt.

Je nach Anwendungsfall kann die erfindungsgemäße Beleuchtungsvorrichtung verschiedene Funktionalitäten übernehmen. In einer Ausführungsform umfasst die Beleuchtungsvorrichtung einen Scheinwerfer. Ein Scheinwerfer zeichnet sich dadurch aus, dass er aktiv die Umgebung des Fahrzeugs ausleuchtet. Gegebenenfalls kann die erfindungsgemäße Beleuchtungsvorrichtung auch eine Signalleuchte umfassen, welche sich dadurch auszeichnet, dass sie lediglich zur Signalgebung für andere Verkehrsteilnehmer dient. Ebenso kann die erfindungsgemäße Beleuchtungsvorrichtung eine Kombination aus Scheinwerfer und Signalleuchte sein.

In einer bevorzugten Variante ist die Beleuchtungsvorrichtung als Scheinwerfer derart ausgestaltet, dass im Betrieb als vorgegebene Lichtverteilung eine Abblendlichtchara kteristik und/oder eine Fernlichtcharakteristik generiert werden kann. Eine Abblendlichtcharakteristik zeichnet sich durch eine scharfe Hell-Dunkel-Grenze aus, welche vorzugsweise unter Verwendung der oben beschriebenen Blende erzeugt wird. Der im Bereich der Hell-Dunkel-Grenze verwendete Scanner weist vorzugsweise eine hohe bzw. eine höhere örtliche Auflösung als andere Scanner der Scaneinrichtung auf. Dies kann dadurch erreicht werden, dass mit diesem Scanner ein Lichtspot mit kleinerer Größe als die Lichtspots der anderen Scanner erzeugt wird.

Neben der erfindungsgemäßen Beleuchtungsvorrichtung betrifft die Erfindung ferner ein Kraftfahrzeug, welches eine oder mehrere der erfindungsgemäßen Beleuchtungsvorrichtungen umfasst.

Ausführungsbeispiele der Erfindung werden nachfolgend anhand der beigefügten Figuren detailliert beschrieben.

Es zeigen:
- Fig. 1: eine schematische Darstellung einer bekannten Beleuchtungsvorrichtung mit einem einzelnen Scanner;
- Fig. 2: eine schematische Darstellung einer Abwandlung der Beleuchtungsvorrichtung der Fig. 1 mit einer alternativen Blendenlage;
- Fig. 3: eine schematische Darstellung einer Ausführungsform einer erfindungsgemäßen Beleuchtungsvorrichtung mit mehreren Scannern; und
- Fig. 4: eine schematische Darstellung einer weiteren Ausführungsform einer nicht erfindungsgemäßen Beleuchtungsvorrichtung.

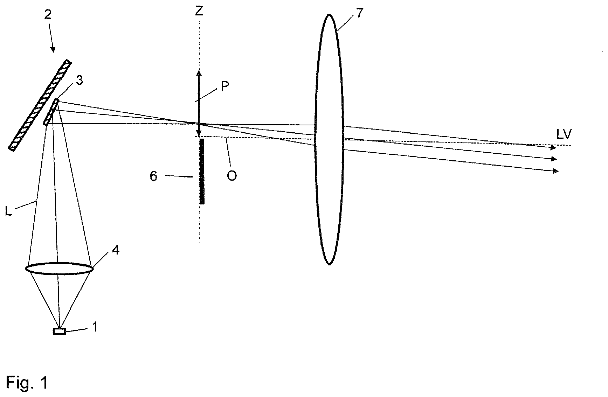

In Fig. 1 ist eine Seitenansicht einer bekannten Beleuchtungsvorrichtung für ein Kraftfahrzeug wiedergegeben. Bei der Beleuchtungsvorrichtung handelt es sich um einen in einem Kraftfahrzeug (nicht gezeigt) verbauten Scheinwerfer. Die Beleuchtungsvorrichtung umfasst eine Lichtquelle 1, mit der Weißlicht erzeugt wird, z.B. in der Form eines Arrays aus mehreren Halbleiterdioden. Gegebenenfalls können als Lichtquelle auch monochromatische Halbleiterdioden bzw. Laserdioden verwendet werden, wobei in diesem Fall zusätzlich an einer geeigneten Stelle im Strahlengang des Lichts ein Konvertierungselement, z.B. in der Form einer Phosphorschicht, zur Wandlung des monochromatischen Lichts in Weißlicht vorgesehen ist. Als Position für das Konvertierungselement eignet sich insbesondere die weiter unten beschriebene Zwischenbildebene Z.

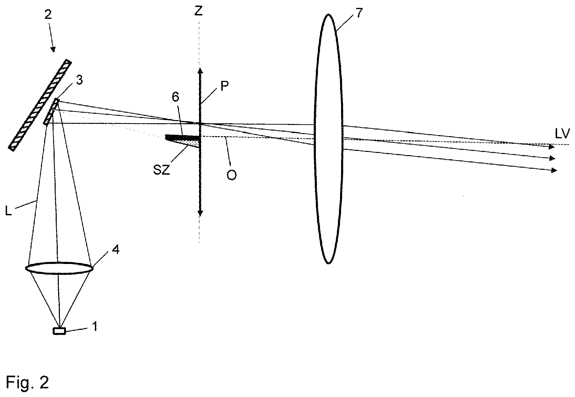

Das Licht der Lichtquelle 1 wird über eine Kollimatorlinse 4 zu einem Lichtbündel L kollimiert. Der Strahlengang des Lichtbündels der Fig. 1 und auch der Lichtbündel der Fig. 2 bis Fig. 4 wird dabei durch drei Linien angedeutet. Das Lichtbündel L fällt auf eine Scaneinrichtung 2, die in an sich bekannter Weise einen einzelnen 2D-Scanner 3 umfasst. Der Scanbereich des Scanners 3 in vertikaler Richtung in der Zwischenbildebene Z ist dabei durch den Doppelpfeil P angedeutet. Der Scanner wird geeignet über eine Ansteuereinheit (nicht gezeigt) angesteuert und lenkt das Lichtbündel zeitlich variierend über einen Scanspiegel in horizontaler Richtung (d.h. senkrecht zur Blattebene) und in vertikaler Richtung (d.h. in der Blattebene) ab. Dieses abgelenkte Lichtbündel passiert eine Blende 6, welche in Fig. 1 senkrecht zu der optischen Achse O der Beleuchtungsvorrichtung angeordnet ist. Mit dieser Blende wird der Verlauf einer Hell-Dunkel-Grenze festgelegt, die für eine Abblendlichtcharakteristik des Scheinwerfers erforderlich ist. Dabei verläuft die Hell-Dunkel-Grenze vom entfernten Ende des Fahrbahnrands zunächst horizontal und erstreckt sich dann in der Nähe des Fahrbahnrands schräg nach oben. Die Beleuchtungsvorrichtung umfasst ferner eine Austrittsoptik in der Form einer Linse 7, mit der eine Abbildung der Zwischenbildebene Z in eine Lichtverteilung LV im Fernfeld der Beleuchtungsvorrichtung auf der Straße generiert wird. Im Blendenbereich kann mit dieser Anordnung kein Licht erzeugt werden, so dass in diesem Fall der Scanner nur eine variable Lichtverteilung unterhalb der Hell/Dunkel-Grenze generieren kann.

In Fig. 2 ist im Wesentlichen die gleiche Beleuchtungsvorrichtung wie in Fig. 1 dargestellt, nur mit dem Unterschied, dass die Blende 6 nunmehr horizontal (d.h. entlang der optischen Achse O) angeordnet ist und der Scanbereich eine größere vertikale Ausdehnung aufweist. Eine horizontale Blendenanordnung ermöglicht es, mit dem Scanner sowohl verschiedene Abblendlichtverteilungen als auch verschiedene Fernlichtverteilungen bzw. beliebige Kombinationen daraus zu generieren. Zur Generierung einer Abblendlichtcharakteristik scannt der Scanner im Wesentlichen nur in dem Scanbereich oberhalb der Blende 6, wodurch im Fernfeld über die optische Abbildung durch die Linse 7 eine Lichtverteilung unterhalb des Verlaufs der Blende generiert wird. Beim Anschalten des Fernlichts wird im Wesentlichen im gesamten Scanbereich P gescannt, so dass in einem wesentlich größeren vertikalen Bereich eine Lichtverteilung generiert wird. Dabei besteht jedoch das Problem, dass ein Schattenwurf im Bereich der Blende 6 erzeugt wird, der durch die Schattenzone SZ in Fig. 2 verdeutlicht ist. Es treten somit in der Lichtverteilung des Fernlichtes unerwünschte Abschattungen auf. Solche Abschattungen können mit der im Folgenden beschriebenen Ausführungsform der erfindungsgemäßen Beleuchtungsvorrichtung vermieden werden.

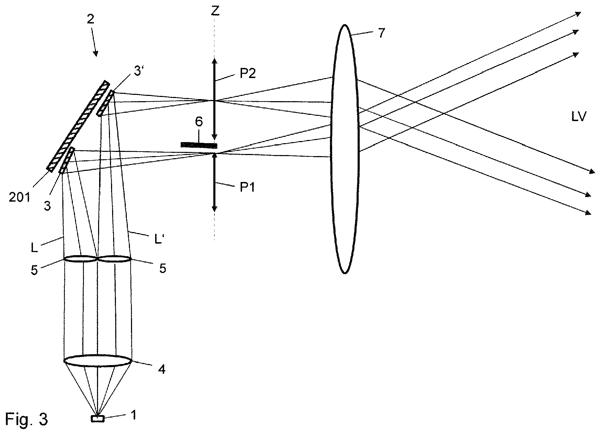

Fig. 3 zeigt in Seitenansicht eine schematische Darstellung einer Ausführungsform einer erfindungsgemäßen Beleuchtungsvorrichtung. Große Teile der Beleuchtungsvorrichtung der Fig.3 entsprechen der Fig. 1 bzw. Fig. 2, wobei für die Bezeichnung gleicher Komponenten in beiden Figuren die gleichen Bezugszeichen verwendet wurden. In Analogie zu Fig. 2 umfasst die Beleuchtungsvorrichtung der Fig. 3 eine Lichtquelle 1 in der Form eines Arrays von Halbleiterdioden, welche Weißlicht generieren. Wie in Fig. 1 bzw. Fig. 2 können gegebenenfalls auch monochromatische Halbleiterdioden bzw. Laserdioden verwendet werden, wobei in diesem Fall wiederum ein entsprechendes Konvertierungselement im Strahlengang anzuordnen ist. Das Licht der Lichtquelle 1 gelangt über eine Eintrittsoptik, welche eine Sammellinse 4 sowie ein Linsenarray aus zwei Linsen 5 umfasst, zu einer Scaneinrichtung 2. Der wesentliche Unterschied zwischen der Vorrichtung der Fig. 2 und der Vorrichtung der Fig. 3 besteht dabei darin, dass gemäß Fig. 3 über die Eintrittsoptik zwei separate Lichtbündel L und L' erzeugt werden und die Scaneinrichtung 2 separat ansteuerbare Scanner 3 und 3' mit entsprechenden Scanspiegeln umfasst, auf welche jeweils eines der Lichtbündel L bzw. L' fällt. Die beiden Scanner sind unabhängig voneinander betreibbar, d.h. die jeweiligen Lichtbündel können unabhängig voneinander abgelenkt werden. Die beiden Scanner 3 und 3' sind wiederum 2D-Scanner, welche das jeweilige Lichtbündel in horizontaler und vertikaler Richtung verschwenken können. Vorzugsweise werden als Scanner sog. Vektorscanner verwendet, mit denen - im Gegensatz zu Zeilenscannern - die Scangeschwindigkeit bzw. die Scanrichtung und damit die Ablenkung des jeweiligen Lichtbündels frei variiert werden kann. Dies ermöglicht eine große Freiheit in der Generierung von gewünschten Lichtverteilungen.

In der Ausführungsform der Fig. 3 sind die beiden separaten Scanner auf einer gemeinsamen Baueinheit angeordnet, welche schematisch durch das Bezugszeichen 201 angedeutet ist. Über die gemeinsame Baueinheit wird dabei ein gemeinsamer Kühler für die reflektierenden Scanspiegel gebildet. Ebenso kann eine gemeinsame Elektronik für die Scanner verwendet werden, wobei jedoch die Ansteuerung durch diese gemeinsame Elektronik separat für die einzelnen Scanner erfolgt. Darüber hinaus kann gegebenenfalls eine gemeinsame mechanische Einstelleinrichtung zur Grobjustage der Scanner verwendet werden. Diese Einstelleinrichtung kann die Lage eines gemeinsamen Trägers verstellen, auf dem die Scanner angeordnet sind.

In Analogie zur Ausführungsform der Fig. 2 umfasst die Beleuchtungsvorrichtung der Fig. 3 eine Blende 6, die sich parallel zur optischen Achse (nicht aus Fig. 2 ersichtlich) erstreckt und im Bereich der Zwischenbildebene Z angeordnet ist. Die Blende erzeugt wiederum eine Hell-Dunkel-Grenze für eine Abblendlichtcharakteristik des Scheinwerfers. Die Zwischenbildebene wird wiederum über eine Austrittsoptik 7 in der Form einer Linse in die Lichtverteilung LV auf der Straße gewandelt. In der Ausführungsform der Fig. 2 liegt der Scanbereich des Scanners 3 unterhalb der Blende 6, was durch den Doppelpfeil P1 angedeutet ist. Demgegenüber liegt der Scanbereich des Scanners 3' oberhalb der Blende 6, was durch den Doppelpfeil P2 angedeutet ist. Zur Generierung einer Abblendlichtverteilung wird dabei im Wesentlichen nur der Scanner 3' verwendet, der die Abblendlichtcharakteristik mit Hilfe der Blende 6 generiert. Beim Zuschalten von Fernlicht wird ferner der Scanner 3 in Betrieb genommen, so dass auch horizontal weiter oben liegende Bereiche ausgeleuchtet werden. Durch die separaten Scanbereiche der beiden Scanner 3 und 3' wird dabei ein totaler Schattenwurf vermieden, der bei der Verwendung eines einzelnen Scanners in der Vorrichtung der Fig. 2 auftritt.

In einer Abwandlung der Ausführungsform der Fig. 1 können zur Erreichung einer guten Lichtausbeute die Scanbereiche P1 und P2 der beiden Scanner 3 bzw. 3' auch überlappen. Zum Beispiel kann bei der Erzeugung einer Abblendlichtcharakteristik der Scanner 3' nur in der unmittelbaren Umgebung oberhalb der Blende 6 scannen, wohingegen der Scanner 3 den restlichen Bereich oberhalb der Blende ausleuchtet. Demgegenüber arbeiten bei der Generierung einer Fernlichtverteilung beide Scanner 3 und 3' in einem Scanbereich sowohl oberhalb als auch unterhalb der Blende.

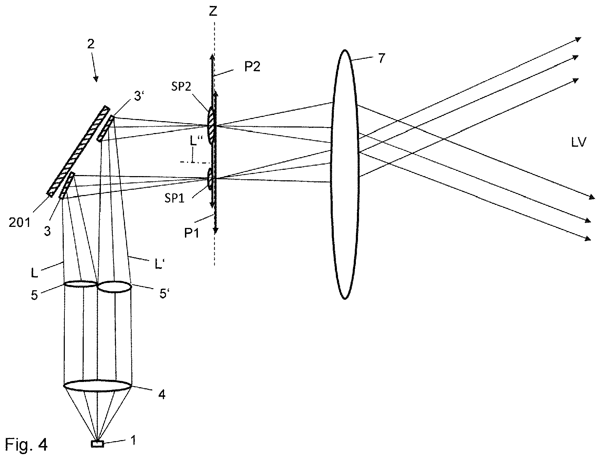

Fig. 4 zeigt eine Abwandlung der Ausführungsform der Fig. 3. Dabei überlappen die Scanbereiche P1 und P2 der Scanner 3 bzw. 3'. Ferner wird durch die Verwendung von unterschiedlichen Linsen 5 und 5' in der Eintrittsoptik die Generierung von Lichtverteilungen mit unterschiedlicher Spotgröße erreicht. Insbesondere wird durch den Scanner 3' ein Lichtspot SP2 in der Zwischenbildebene Z und damit auch in der Lichtverteilung LV erzeugt, der wesentlich größer als der mit dem Scanner 3 erzeugte Lichtspot SP1 ist. Darüber hinaus wurde in der Ausführungsform der Fig. 4 die Blende weggelassen, wobei die Blendenposition aus Fig. 3 noch durch die Linie L" angedeutet ist. Zur Erzeugung einer Hell-Dunkel-Grenze in der Abblendlichtverteilung wird nunmehr der Spot SP1 verwendet, der im Bereich der früheren Position der Blende scannt. Aufgrund der kleiner Größe des Spots SP1 kann hierdurch eine scharfe Hell-Dunkel-Grenze auch ohne Blende generiert werden.

Neben dem Vorteil der Vermeidung einer Abschattung weisen die Beleuchtungsvorrichtung gemäß den oben beschriebenen Ausführungsformen weitere Vorteile auf. Insbesondere kann bei der Verwendung von mehreren Scannern die Ablenkfrequenz zur Erreichung der gleichen räumlichen Auflösung bzw. des gleichen Helligkeitsgradienten der Lichtverteilung herabgesetzt werden. Durch die verminderte Ablenkfrequenz werden dabei störende Scaneffekte, wie z.B. der Stroboskop-Effekt, vermieden. Darüber hinaus wird durch Integration der mehreren Scanner auf einer gemeinsamen Baueinheit sowie durch die Nutzung einer gemeinsamen Eintritts- bzw. Austrittsoptik ein einfacher Aufbau der Beleuchtungseinrichtung gewährleistet. Ferner kann die erreichbare Abtastrate durch die Verwendung von mehreren Scannern erhöht werden. Dies kann durch Aufteilung des Beleuchtungsfelds in mehrere separate Scanbereiche erreicht werden, wie in Fig. 3 und Fig. 4 angedeutet ist. Die Erhöhung der Abtastrate kann gegebenenfalls jedoch auch über die Mehrfachabtastung eines gemeinsamen Scanfelds realisiert werden.

### Bezugszeichenliste

- 1: Lichtquelle
- 2: Scaneinrichtung
- 201: Baueinheit
- 3,3': Scanner
- 4: Sammellinse
- 5,5': Linsenarray
- 6: Blende
- 7: Austrittsoptik
- P, P1, P2: Scanbereiche
- L, L': Lichtbündel
- L": Blendenposition
- SZ: Schattenzone
- LV: Lichtverteilung
- Z: Zwischenbildebene
- O: optische Achse

## Patentansprüche

1. Beleuchtungsvorrichtung für ein Kraftfahrzeug, umfassend eine Lichtquelle (1) aus einer Anzahl von Halbleiterdioden sowie eine S caneinrichtung (2), auf welche Licht der Lichtquelle (1) fällt und welche im Betrieb der Beleuchtungsvorrichtung eine zeitlich variierende Ablenkung des einfallenden Lichts der Lichtquelle (1) und hierdurch eine vorgegebene Lichtverteilung (LV) in einem Abstand von der Beleuchtungsvorrichtung erzeugt, wobei die Scaneinrichtung (2) zumindest zwei getrennt ansteuerbare Scanner (3, 3') umfasst, auf welche jeweils ein separates, aus dem Licht der Lichtquelle (1) erzeugtes Lichtbündel (L, L') fällt, dessen Ablenkung durch den jeweiligen Scanner (3, 3') zeitlich variiert wird,
**dadurch gekennzeichnet dass** im Strahlengang der Lichtbündel (L, L') nach Ablenkung durch die Scaneinrichtung (2) eine Blende (6) angeordnet ist, wobei die Blende (6) eine Unterteilung einer Bildebene in zwei Bereiche bewirkt, wobei in zumindest einer Betriebsart der Beleuchtungsvorrichtung ein Teil der Scanner (3) der Scaneinrichtung (2) ausschließlich zur Ablenkung von Lichtbündeln (L) in einem Bereich auf einer Seite der Blende (6) und der andere Teil der Scanner (3) der Scaneinrichtung (2) ausschließlich zur Ablenkung von Lichtbündeln (L') in einem Bereich auf der anderen Seite der Blende (6) vorgesehen ist.

2. Beleuchtungsvorrichtung nach Anspruch 1, **dadurch gekennzeichnet, dass** einer oder mehrere der Scanner (3, 3') und insbesondere alle Scanner (3, 3') der Scaneinrichtung (2) jeweils eine zweidimensionale Scaneinheit und/oder eine Vektor-Scaneinheit umfassen.

3. Beleuchtungsvorrichtung nach Anspruch 1 oder 2, **dadurch gekennzeichnet, dass** die Beleuchtungsvorrichtung zumindest eine Eintrittsoptik (4, 5) für das Licht der Lichtquelle (1) umfasst, wobei im Betrieb der Beleuchtungsvorrichtung über die zumindest eine Eintrittsoptik (4, 5) die separaten Lichtbündel (L, L') erzeugt werden.

4. Beleuchtungsvorrichtung nach Anspruch 3, **dadurch gekennzeichnet, dass** eine gemeinsame Eintrittsoptik (4, 5) zur Erzeugung aller separater Lichtbündel (L', L") vorgesehen ist.

5. Beleuchtungsvorrichtung nach einem der vorhergehende Ansprüche, **dadurch gekennzeichnet, dass** die Eintrittsoptik ein Linsenarray mit unterschiedlichen Linsen (5, 5') umfasst, das derart ausgestaltet ist, dass die separaten Lichtbündel (L, L') Lichtspots unterschiedlicher Größe in der vorgegebenen Lichtverteilung (LV) generieren.

6. Beleuchtungsvorrichtung nach einem der vorhergehende Ansprüche, **dadurch gekennzeichnet, dass** für die durch die zumindest zwei Scanner (3, 3') abgelenkten Lichtbündel (L, L') zumindest eine Austrittsoptik (7) vorgesehen ist, über welche als Abbildung die vorgegebene Lichtverteilung (LV) generiert wird.

7. Beleuchtungsvorrichtung nach Anspruch 6, **dadurch gekennzeichnet, dass** eine gemeinsame Austrittsoptik (7) für alle abgelenkten Lichtbündel (L', L") vorgesehen ist.

8. Beleuchtungsvorrichtung nach einem der vorhergehenden Ansprüche, **dadurch gekennzeichnet, dass** einer oder mehrere der Scanner (3, 3') der Scaneinrichtung (2) jeweils einen separaten Bereich der vorgegebenen Lichtverteilung (LV) generieren und/oder dass zumindest zwei Scanner (3, 3') überlappende Bereiche der vorgegebenen Lichtverteilung (LV) generieren.

9. Beleuchtungsvorrichtung nach einem der vorhergehenden Ansprüche, **dadurch gekennzeichnet, dass** mit der Blende (6) eine Hell-Dunkel-Grenze in der vorgegebenen Lichtverteilung (LV) generiert wird.

10. Beleuchtungsvorrichtung nach einem der vorhergehenden Ansprüche, **dadurch gekennzeichnet, dass** sich die Blende (6) im Wesentlichen parallel zu einer, durch den Strahlengang der Lichtbündel (L, L') vorgegebenen optischen Achse (O) erstreckt.

11. Beleuchtungsvorrichtung nach einem der vorhergehenden Ansprüche, **dadurch gekennzeichnet, dass** in zumindest einer Betriebsart der Beleuchtungsvorrichtung zumindest ein Scanner (3, 3') ausschließlich zur Generierung der Lichtverteilung an einer Hell-Dunkel-Grenze vorgesehen ist.

12. Beleuchtungsvorrichtung nach einem der vorhergehenden Ansprüche, **dadurch gekennzeichnet, dass** die zumindest zwei Scanner (3, 3') der Scaneinrichtung (2) auf einer gemeinsamen Baueinheit (201) vorgesehen sind, wobei die gemeinsame Baueinheit (201) insbesondere eine gemeinsame Kühleinheit und/oder eine gemeinsame Elektronikeinheit für die Scanner (3, 3') und/oder eine gemeinsame mechanische Einstelleinrichtung für einen Träger aufweist, auf dem die Scanner (3, 3') montiert sind.

13. Beleuchtungsvorrichtung nach einem der vorhergehenden Ansprüche, **dadurch gekennzeichnet, dass** zumindest ein Scanner (3, 3') und insbesondere jeder der Scanner als ein MEMS-Element ausgestaltet ist.

14. Beleuchtungsvorrichtung nach einem der vorhergehenden Ansprüche, **dadurch gekennzeichnet, dass** die Anzahl der Halbleiterdioden der Lichtquelle (1) eine oder mehrere Laserdioden umfasst.

15. Beleuchtungsvorrichtung nach einem der vorhergehenden Ansprüche, **dadurch gekennzeichnet, dass** die Lichtquelle (1) monochromatisches Licht erzeugt und ein Konvertierungselement zur Wandlung des Lichts der Lichtquelle (1) in Weißlicht vorgesehen ist.

16. Beleuchtungsvorrichtung nach einem der vorhergehenden Ansprüche, **dadurch gekennzeichnet, dass** die Beleuchtungsvorrichtung (1) eine Signalleuchte und/oder einen Scheinwerfer umfasst.

17. Beleuchtungsvorrichtung nach einem der vorhergehenden Ansprüche, **dadurch gekennzeichnet, dass** die Beleucht ungsvorrichtung (1) einen Scheinwerfer umfasst und derart ausgestaltet ist, dass im Betrieb als vorgegebene Lichtverteilung (LV) eine Abblendlichtcharakteristik und/oder eine Fernlichtcharakteristik generiert wird.

18. Kraftfahrzeug, umfassend eine Beleuchtungsvorrichtung nach einem der vorhergehenden Ansprüche.

## Claims

1. An illumination device for a motor vehicle, comprising a light source (1) formed of a number of semiconductor diodes, and also a scanning means (2) onto which light from the light source (1) falls and which during operation of the illumination device produces a deflection of the incident light from the light source (1) which varies over time and thereby a specified light distribution (LV) at a distance from the illumination device, wherein the scanning means (2) comprises at least two separately actuatable scanners (3, 3') onto which in each case a separate light beam (L, L') produced from the light of the light source (1) falls, the deflection of which beam is varied over time by the respective scanner (3, 3'),
**characterised in that** a stop (6) is arranged in the optical path of the light beams (L, L') after deflection by the scanning means (2), the stop (6) bringing about a subdivision of an image plane into two regions, with in at least one operating mode of the illumination device one part of the scanners (3) of the scanning means (2) being provided exclusively for deflection of light beams (L) in a region on one side of the stop (6), and the other part of the scanners (3) of the scanning means (2) being provided exclusively for deflection of light beams (L') in a region on the other side of the stop (6).

2. An illumination device according to Claim 1, **characterised in that** one or more of the scanners (3, 3') and especially all the scanners (3, 3') of the scanning means (2) comprise in each case a two-dimensional scanning unit and/or a vector scanning unit.

3. An illumination device according to Claim 1 or Claim 2, **characterised in that** the illumination device comprises at least one entry optical means (4, 5) for the light from the light source (1), wherein the separate light beams (L, L') are produced during operation of the illumination device via the at least one entry optical means (4, 5).

4. An illumination device according to Claim 3, **characterised in that** a common entry optical means (4, 5) is provided for producing all the separate light beams (L', L").

5. An illumination device according to one of the preceding claims, **characterised in that** the entry optical means comprises a lens array with different lenses (5, 5'), which is configured such that the separate light beams (L, L') generate light spots of different sizes in the specified light distribution (LV).

6. An illumination device according to one of the preceding claims, **characterised in that** at least one exit optical means (7) is provided for the light beams (L, L') deflected by the at least two scanners (3, 3'), by means of which optical means the specified light distribution (LV) is generated as an image.

7. An illumination device according to Claim 6, **characterised in that** a common exit optical means (7) is provided for all the deflected light beams (L', L").

8. An illumination device according to one of the preceding claims, **characterised in that** one or more of the scanners (3, 3') of the scanning means (2) generate(s) in each case a separate region of the specified light distribution (LV) and/or **in that** at least two scanners (3, 3') generate overlapping regions of the specified light distribution (LV).

9. An illumination device according to one of the preceding claims, **characterised in that** a light/dark boundary is generated in the specified light distribution (LV) with the stop (6).

10. An illumination device according to one of the preceding claims, **characterised in that** the stop (6) extends substantially parallel to an optical axis (O) specified by the optical path of the light beams (L, L').

11. An illumination device according to one of the preceding claims, **characterised in that** in at least one operating mode of the illumination device at least one scanner (3, 3') is provided exclusively to generate the light distribution at a light/dark boundary.

12. An illumination device according to one of the preceding claims, **characterised in that** the at least two scanners (3, 3') of the scanning means (2) are provided on a common structural unit (201), the common structural unit (201) having especially a common cooling unit and/or a common electronic unit for the scanners (3, 3') and/or a common mechanical setting means for a support on which the scanners (3, 3') are mounted.

13. An illumination device according to one of the preceding claims, **characterised in that** at least one scanner (3, 3') and especially each of the scanners is configured as a MEMS element.

14. An illumination device according to one of the preceding claims, **characterised in that** the number of semiconductor diodes of the light source (1) comprises one or more laser diode(s).

15. An illumination device according to one of the preceding claims, **characterised in that** the light source (1) produces monochromatic light and a converting element for converting the light from the light source (1) into white light is provided.

16. An illumination device according to one of the preceding claims, **characterised in that** the illumination device (1) comprises an indicator light and/or a headlight.

17. An illumination device according to one of the preceding claims, **characterised in that** the illumination device (1) comprises a headlight and is configured such that in operation a dipped-headlight characteristic and/or a main-beam characteristic is generated as specified light distribution (LV).

18. A motor vehicle, comprising an illumination device according to one of the preceding claims.

## Revendications

1. Dispositif d'éclairage destiné à un véhicule comprenant une source de lumière (1) constituée par un ensemble de diodes semi-conductrices ainsi qu'un dispositif de balayage (2) sur lequel tombe la lumière provenant de la source de lumière (1), et qui permet d'obtenir lors du fonctionnement du dispositif d'éclairage une déviation variable dans le temps de la lumière incidente provenant de la source de lumière (1) et par suite une distribution prédéfinie (LV) de la lumière à distance du dispositif d'éclairage, le dispositif de balayage (2) comprenant au moins deux scanners (3, 3') pouvant être commandés séparément sur lesquels tombe respectivement un faisceau de lumière (L, L') séparé obtenu à partir de la lumière provenant de la source de lumière (1) et dont la déviation par le scanner (3, 3') respectif varie dans le temps,
**caractérisé en ce qu'**
un diaphragme (6) est monté dans le chemin optique du faisceau de lumière (L, L'), après la déviation par le dispositif de balayage (2), le diaphragme (6) subdivisant un plan image en deux zones, dans au moins un mode de fonctionnement du dispositif d'éclairage une partie du scanner (3) du dispositif de balayage (2) étant exclusivement prévu pour dévier des faisceaux de lumière (L) dans une zone située d'un côté du diaphragme (6), et l'autre partie du scanner (3) du dispositif de balayage (2) étant exclusivement prévue pour dévier des faisceaux de lumière (L') dans une zone située de l'autre côté du diaphragme (6).

2. Dispositif d'éclairage conforme à la revendication 1,
**caractérisé en ce qu'**
au moins l'un des scanners (3, 3') et en particulier tous les scanners (3, 3') du dispositif de balayage (2) comporte(nt) respectivement une unité de balayage bidimensionnelle et/ou une unité de balayage vectorielle.

3. Dispositif d'éclairage conforme à la revendication 1 ou 2,
**caractérisé en ce qu'**
il comporte au moins une optique d'entrée (4, 5) de la lumière provenant de la source de lumière (1), et lors du fonctionnement du dispositif d'éclairage, les faisceaux de lumière (L, L') séparés sont obtenus par l'intermédiaire de l'optique d'entrée (4, 5).

4. Dispositif d'éclairage conforme à la revendication 3,
**caractérisé en ce qu'**
il est prévu une optique d'entrée (4, 5) commune pour permettre d'obtenir tous les faisceaux de lumière séparés (L', L").

5. Dispositif d'éclairage conforme à l'une des revendications précédentes,
**caractérisé en ce que**
l'optique d'entrée comporte un réseau de lentilles comprenant des lentilles (5, 5') différentes qui est réalisé de sorte que les faisceaux de lumière séparés (L, L') génèrent des spots de lumière de différentes grandeurs dans la distribution de la lumière (LV) prédéfinie.

6. Dispositif d'éclairage conforme à l'une des revendications précédentes,
**caractérisé en ce que**
pour les faisceaux de lumière (L, L') déviés par les scanners (3, 3') qui sont au moins au nombre de deux, il est prévu au moins une optique de sortie (7) par l'intermédiaire de laquelle la distribution de la lumière (LV) prédéfinie est générée en tant qu'image.

7. Dispositif d'éclairage conforme à la revendication 6,
**caractérisé en ce qu'**
il est prévu une optique de sortie commune (7) pour tous les faisceaux de lumière (L', L") déviés.

8. Dispositif d'éclairage conforme à l'une des revendications précédentes,
**caractérisé en ce qu'**
au moins l'un des scanners (3, 3') du dispositif de balayage (2) génère respectivement une zone séparée de la distribution de la lumière prédéfinie (LV), et/ou au moins deux scanners (3, 3') génèrent des zones se chevauchant de la distribution de la lumière (LV) prédéfinie.

9. Dispositif d'éclairage conforme à l'une des revendications précédentes,
**caractérisé en ce que**
le diaphragme (6) permet de générer une limite clair-obscur dans la distribution de la lumière (LV) prédéfinie.

10. Dispositif d'éclairage conforme à l'une des revendications précédentes,
**caractérisé en ce que**
le diaphragme (6) s'étend essentiellement parallèlement à l'axe optique (O) prédéfini par le chemin optique du faisceau de lumière (L, L').

11. Dispositif d'éclairage conforme à l'une des revendications précédentes,
**caractérisé en ce que**
dans au moins un mode de fonctionnement du dispositif d'éclairage au moins un scanner (3, 3') est exclusivement prévu pour générer la distribution de la lumière au niveau de la limite clair-obscur.

12. Dispositif d'éclairage conforme à l'une des revendications précédentes,
**caractérisé en ce que**
les scanners (3, 3') qui sont au moins au nombre de deux du dispositif de balayage (2) sont montés sur une unité commune (201), et cette unité commune (201) comporte en particulier une unité de refroidissement commune et/ou une unité électronique commune pour les scanners (3, 3') et/ou une installation de réglage mécanique commune d'un support sur lequel sont montés les scanners (3, 3').

13. Dispositif d'éclairage conforme à l'une des revendications précédentes,
**caractérisé en ce qu'**
au moins un scanner (3, 3') et en particulier chacun des scanners est réalisé sous la forme d'un élément MEMS.

14. Dispositif d'éclairage conforme à l'une des revendications précédentes,
**caractérisée en ce que**
les diodes semi-conductrices de la source de lumière (1) comprennent une ou plusieurs diode(s) laser.

15. Dispositif d'éclairage conforme à l'une des revendications précédentes,
**caractérisé en ce que**
la source de lumière (1) émet une lumière monochromatique et il est prévu un élément de conversion permettant de transformer la lumière de la source de lumière (1) en lumière blanche.

16. Dispositif d'éclairage conforme à l'une des revendications précédentes,
**caractérisé en ce qu'**
il est constitué par un feu de signalisation et/ou par un phare.

17. Dispositif d'éclairage conforme à l'une des revendications précédentes,
**caractérisé en ce qu'**
il est constitué par un phare réalisé de façon à générer lors du fonctionnement, en tant que distribution de la lumière (LV) prédéfinie une caractéristique de lumière de croisement et/ou une caractéristique de feu de route.

18. Véhicule comprenant un dispositif d'éclairage conforme à l'une des revendications précédentes.
